(19) Europäisches Patentamt / European Patent Office / Office européen des brevets

(11) **EP 2 482 414 A2**

(12) **EUROPEAN PATENT APPLICATION**

(43) Date of publication:
**01.08.2012 Bulletin 2012/31**

(51) Int Cl.:
***H02J 3/01*** *(2006.01)*

(21) Application number: **11003797.5**

(22) Date of filing: **09.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.02.2011 KR 20110009853**

(71) Applicant: **Hyundai Mobis Co., Ltd.**
**Gyeonggi-do, 446-912 (KR)**

(72) Inventors:
• **Noh, Young Woo**
**Seoul 150-050 (KR)**

• **Byun, Tae Sun**
**Gyeonggi-do 463-814 (KR)**
• **Park, Su Yong**
**Gyeonggi-do 441-740 (KR)**
• **Park, Chang Hwi**
**Gyeonggi-do 442-192 (KR)**

(74) Representative: **TER MEER - STEINMEISTER & PARTNER GbR**
**Patentanwälte**
**Mauerkircherstrasse 45**
**81679 München (DE)**

(54) **Device for generating torsional electromagnetic wave and electric power system employing the same**

(57) The device (410) for generating the torsional electromagnetic wave is electrically isolated from a power source unit providing power to a load. The device can be used regardless of the power supply system such as a single-phase electric system or a tri-phase electric system or and shall reduce power consumptions of devices using an induction motor such as an air conditioner and a refrigerator.

Fig. 4a

**EP 2 482 414 A2**

**Description**

This application claims the benefit of Korean Patent Application No. 10-2011-0009853 filed on February 1, 2011, which is hereby incorporated for reference.

**BACKGROUND OF THE INVENTION**

1. Field of the Invention

The present invention relates to a device for generating a torsional electromagnetic wave and an electric power system employing the same, and more particularly to a device for generating a torsional electromagnetic wave and an electric power system employing the same wherein a power efficiency is improved by applying a torsional electromagnetic wave to a power line electrically connecting a power source unit and a load.

2. Description of the Related Art

An effective electric power P consumed by a load driven by an alternating current satisfies equation 1.

$$\text{Equation 1}$$

, (where V represents a voltage, I represents a current and $\Phi$ represents a power factor).

In accordance with equation 1, by reducing the voltage or the current, the electric power consumed by the load may be reduced.

However, the voltage cannot be reduced, because the load requires a rated voltage to operate properly. Therefore, the current provided to the load should be reduced in order to reduce the electric power consumed by the load.

Factors for determining a quality of the electric power provided to the load are a harmonic wave component and an overvoltage component included in a current provided to the load.

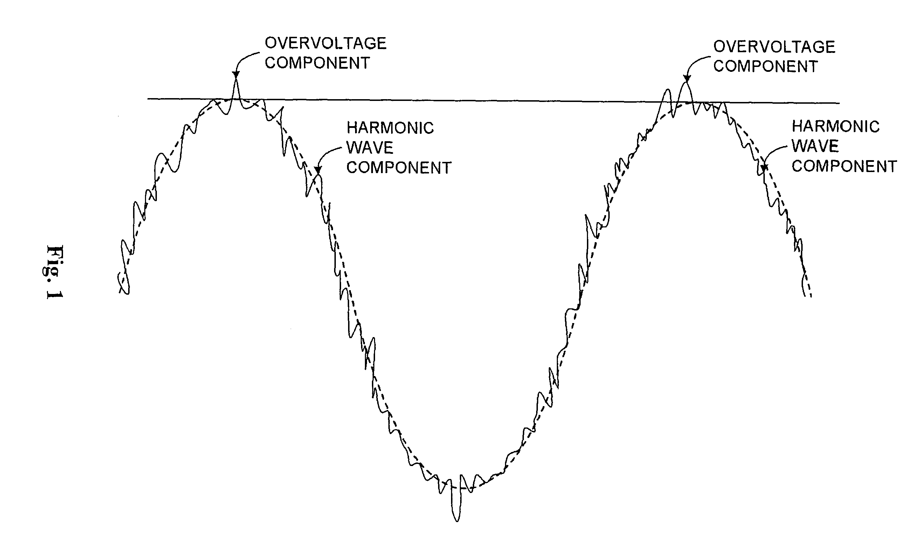

As shown in Fig. 1, the alternating current (shown in Fig. 1 as solid line) substantially differs from an ideal sinusoidal wave (shown in Fig. 1 as dotted line) due to the harmonic wave component and the overvoltage component, thereby increasing the consumption of the electric power by the load.

Specifically, the harmonic wave component causes an increase in the consumption of the electric power by the load, and the overvoltage component causes a malfunction of the load. Therefore, the harmonic wave component included in the current should be minimized in order to reduce the consumption of the electric power by the load, and the overvoltage component may removed in order to prevent the malfunction of the breakdown in the load.

**SUMMARY OF THE INVENTION**

It is an object of the present invention to provide a device for generating a torsional electromagnetic wave and an electric power system employing the same wherein a power efficiency is improved by applying a torsional electromagnetic wave to a power line electrically connecting a power source unit and a load.

In order to achieve above-described object of the present invention, there is provided a device for generating a torsional electromagnetic wave, the device being connected to a power source unit and a load and applying the torsional electromagnetic wave to a power line electrically connecting the power source unit and the load, the device comprising: an upper magnet and a lower magnet for generating a magnetic field therebetween; one or more metal pillars installed between the upper magnet and the lower magnet; and a conductive wire connected to the power line, wherein a first end of the conductive wire is insulated about the lower magnet, a second end of the conductive wire is connected to the power line, and the conductive wire passes about second ends of one or more metal pillars in zigzag form.

There is also provided a power system, comprising: a power source unit for providing a power to a load via a power line connecting the power source unit and the load; and an device for generating a torsional electromagnetic wave for applying a torsional electromagnetic wave to the power line, wherein the device comprises: an upper magnet and a lower magnet for generating a magnetic field therebetween; one or more metal pillars installed between the upper magnet and the lower magnet; and a conductive wire connected to the power line, wherein a first end of the conductive wire is insulated about the lower magnet, a second end of the conductive wire is connected to the power line, and the conductive wire passes between second ends of one or more metal pillars in zigzag form.

Preferably, a north pole of the upper magnet faces a south pole of the lower magnet.

Preferably, a magnetic force of the lower magnet is stronger than that of the upper magnet.

Preferably, a first end of each of the one or more metal pillars is disposed about the upper magnet, and a second end of each of the one or more metal pillars disposed about the lower magnet.

Preferably, the device further comprises; an upper case comprising a first magnet groove wherein the upper magnet is installed and a first pillar groove wherein the first end of each of one or more metal pillars is inserted; and a lower case comprising a second magnet groove wherein the lower magnet is installed and a second pillar groove wherein the second end of each of one or more metal pillars is inserted.

Preferably, the lower case comprises a zigzag groove wherein the conductive wire is inserted.

Preferably, the load comprises an induction motor.

Preferably, each of one or more metal pillars comprises a copper rod.

Preferably, the one or more metal pillars comprise six copper rods parallel to each other, and first ends of the six copper rods are disposed at vertices of a first hexagon and second ends of the six copper rods are disposed at vertices of a second hexagon.

Preferably, the torsional electromagnetic wave applied to the power line has a wavelength corresponding to a frequency of an electron flowing through the power line.

Preferably, the conductive wire is coiled around each of the one or more metal pillars and passes between the second ends of the one or more metal pillars in zigzag form.

## BRIEF DESCRIPTION OF THE DRAWINGS

Fig. 1 is a waveform diagram illustrating an alternating current.

Fig. 2 is a diagram schematically exemplifying an electric system including a device for generating a torsional electromagnetic wave in accordance with the present invention.

Fig. 3 is a diagram schematically illustrating electrons flowing through a power line.

Fig. 4a is a perspective view illustrating a device for generating a torsional electromagnetic wave in accordance with the present invention.

Fig. 4b is a cross-sectional view illustrating a device for generating a torsional electromagnetic wave taken along the line A-A' of Fig. 4a.

Fig. 4c is a diagram illustrating an upper case of a device for generating a torsional electromagnetic wave in accordance with the present invention.

Fig. 4d is a diagram illustrating a lower case of a device for generating a torsional electromagnetic wave in accordance with the present invention.

Fig. 5a is a diagram illustrating a lower case of a device for generating a torsional electromagnetic wave in accordance with an embodiment of the present invention wherein the conductive wire is installed therein.

Fig. 5b is a diagram illustrating a lower case of a device for generating a torsional electromagnetic wave in accordance with another embodiment of the present invention wherein a conductive wire is installed therein.

Figs. 6a through 6d are graphs exemplifying results of a fist comparison test on a 10 kW load.

Figs. 7a through 7d are graphs exemplifying results of a second comparison test on an air conditioner as the load.

## DETAILED DESCRIPTION OF THE INVENTION

A device for generating a torsional electromagnetic wave in accordance with the present invention will described in detail with reference to accompanied drawings.

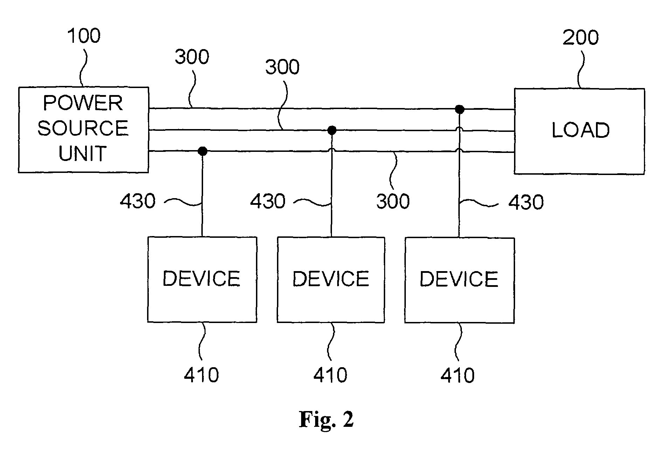

Fig. 2 is a diagram schematically exemplifying an electric power system employing a device in accordance with the present invention, wherein the device generates a torsional electromagnetic wave.

Referring to Fig. 2, the electric power system comprises a power source unit 100 and a device 410 for generating a torsional electromagnetic wave.

The power source unit 100 applies an electric power to a load 200 through a power line 300. The power source unit 100 may provide, but not limited to, a single-phase electric power of a tri-phase electric power.

The power line 300 electrically connects the power source unit 100 and the load 200 to provide a path for a current to flow.

The device 410 applies the torsional electromagnetic wave to the power line 300 through a conductive wire 430.

The device 410 in accordance with the present invention may be installed at each of the power line 300 as shown in Fig. 2. For instance, in case of four-wire tri-phase power system, the device 410 may be installed for each of three wires except N wire.

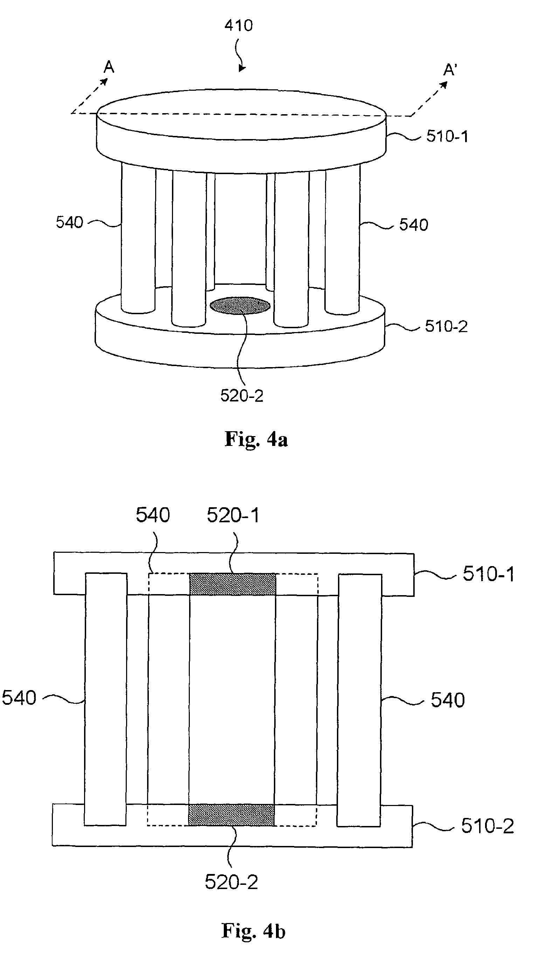

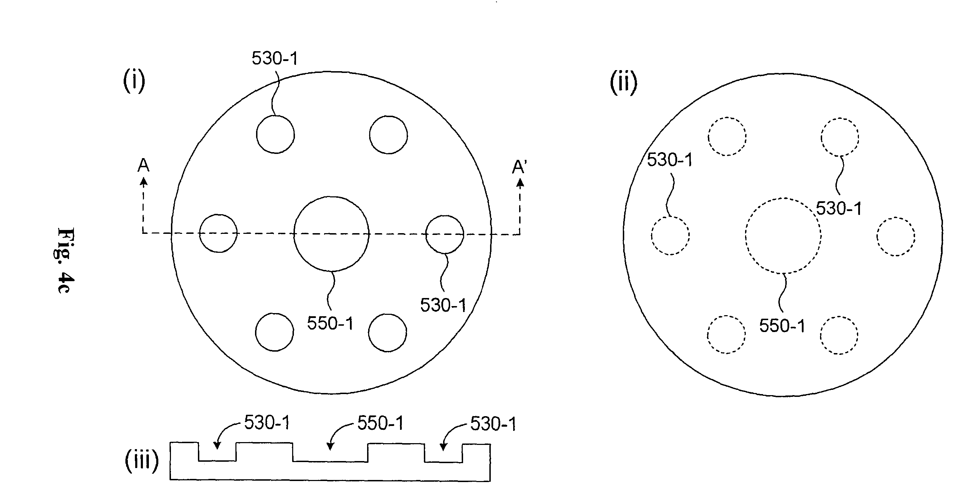

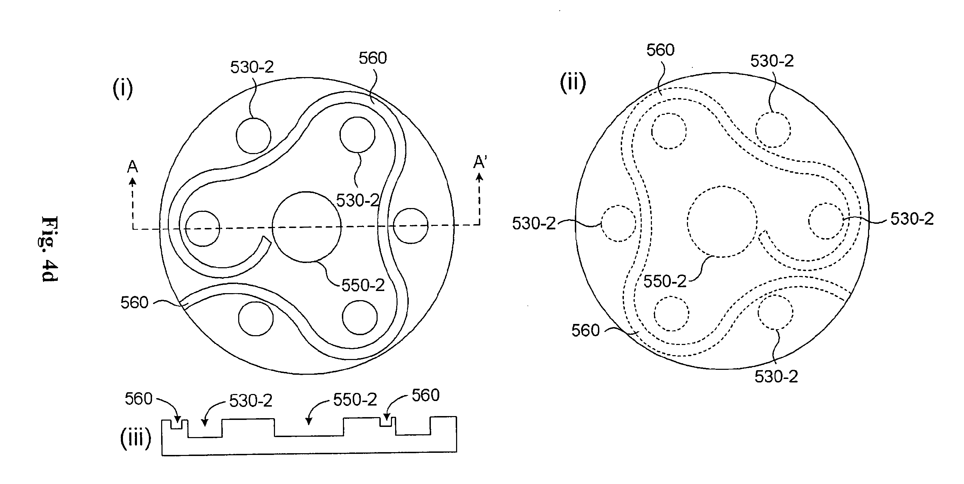

Hereinafter, the device 410 in accordance with the present invention is described in more detail with reference to Fig. 4.

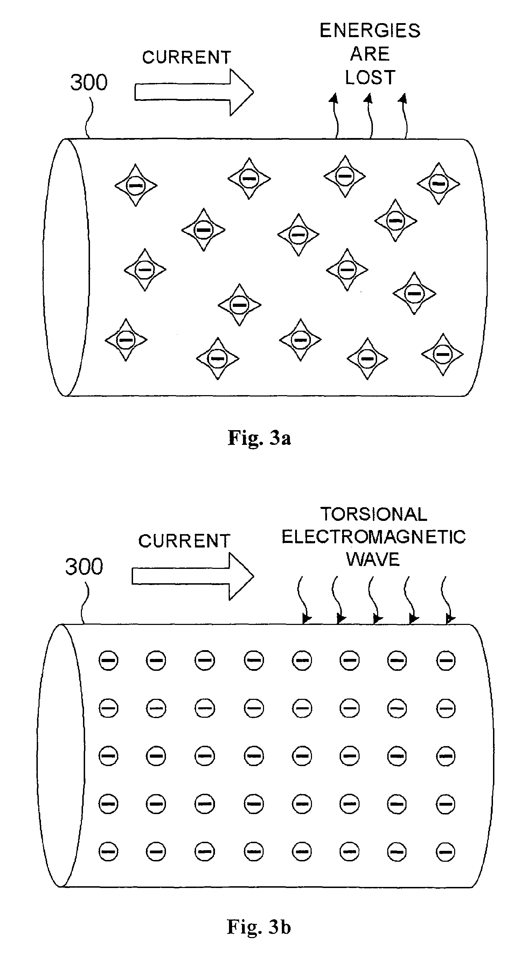

First, an alternating current flowing through a power line is similar to a sinusoidal wave but differs from an ideal sinusoidal wave. As shown in Fig. 3a, the alternating current flowing through the power line comprises a harmonic wave component and a noise component. Moreover, the alternating current comprises an overvoltage component, which results in undesirable effect on a load. A portion of a kinetic energy of electrons constituting the current flowing in a power line is lost as an thermal energy by the harmonic wave, the noise and the overvoltage components.

When the torsional electromagnetic wave having a wavelength corresponding to a frequency of the electrons flowing through the power line is applied thereto, the potential energies of the electrons flowing through the power line increase. Therefore, the lost energy, namely the thermal energy is reverted to an effective energy as shown in Fig. 3b.

The device 410 in accordance with the present invention that generates and allies the torsional electromagnetic wave to the power line is shown in Figs. 4a through 4d.

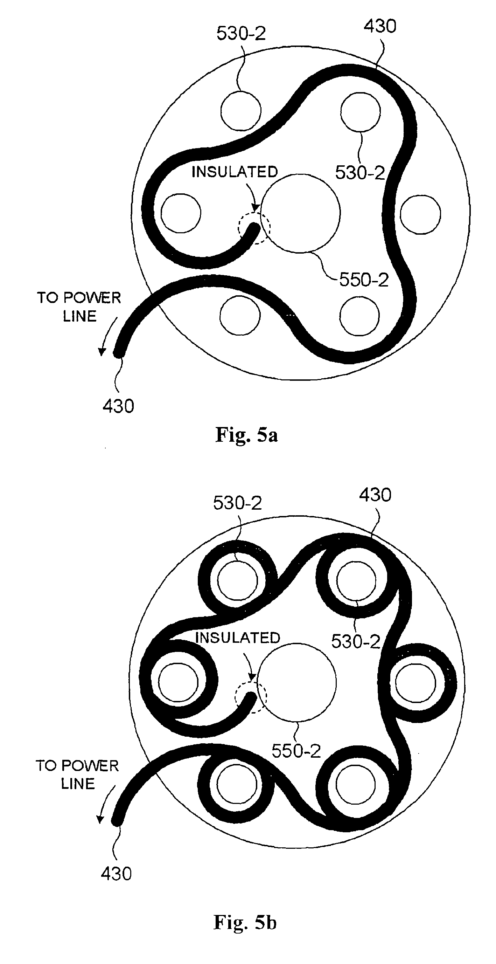

Fig. 4a is a perspective view illustrating the device 410 in accordance with the present invention and Fig. 4b is a cross-sectional view illustrating the device 410 taken along the line A-A' of Fig. 4a. In addition, Figs. 4c and 4d are diagrams illustrating an upper case and a lower case of the device 410 in accordance with the present invention, respectively, wherein (i) in Figs. 4c and 4d are front views illustrating the upper case and the lower case, respectively, (ii) in Figs. 4c and 4d are rear views illustrating the upper case and the lower case, respectively, and (iii) in Figs. 4c and 4d are cross-sectional views illustrating the upper case and the lower case taken along the line A-A' of (i), respectively. In addition, Figs. 5a and 5b are diagrams illustrating the lower case of the device 410 in accordance with the present invention wherein the conductive wire is installed therein.

Referring to Figs. 4a through 4d, the device 410 comprises an upper magnet 520-1, a lower magnet 520-2, one or more metal pillars 540 and a conductive wire 430. Moreover, the device 410 may further comprise an upper case 510-1 and a lower case 510-2.

The upper magnet 520-1 and the lower magnet 520-2 generate a magnetic field in the device 410. Preferably, a north pole of the upper magnet 520-1 faces a south pole of the lower magnet 520-2. Moreover, a magnetic force of the lower magnet 520-2 is stronger than that of the upper magnet 520-1.

The upper magnet 520-1 is installed in a magnet groove 550-1 of the upper case 510-1, and the lower magnet 520-2 is installed in a magnet groove 550-2 of the lower case 510-2. The upper magnet 520-1 and the lower magnet 520-2 may be fixed in the magnet groove 550-1 and the magnet groove 550-2, respectively, using fixing means such as an adhesive if necessary.

The one or more metal pillars 540 are installed between the upper magnet 520-1 and the lower magnet 520-2.

Specifically, a first end of each of the one or more metal pillars 540 is disposed about the upper magnet 520-1, a second end of each of the one or more metal pillars 540 is disposed about the lower magnet 520-2. Particularly, the first end of each of the one or more metal pillars 540 is inserted in a pillar groove 530-1 of the upper case 510-1, and the second end of each of the one or more metal pillars 540 is inserted in a pillar groove 530-2. The first end of each of the one or more metal pillars 540 and the second end of each of the one or more metal pillars 540 may be fixed in the pillar groove 530-1 and the pillar groove 530-2, respectively, using fixing means such as the adhesive if necessary.

Each of the one or more metal pillars 540 may include, but not limited to, a cooper rod.

The device 410 shown in Fig. 5 comprises the one or more metal pillars 540 including six copper rods parallel to each other. First ends of the six copper rods are arranged in a manner that the first ends of the six copper rods form a first hexagon, and second ends of the six copper rods are arranged in a manner that the second ends of the six copper rods form a second hexagon. That is, the first ends of the six copper rods are disposed at vertices of the first hexagon and the second ends of the six copper rods are disposed at vertices of the second hexagon. However, the one or more metal pillars 540 may be arranged to form polygons other than the hexagons. For instance, four copper rods may be disposed at vertices of tetragons or and eight copper rods may be disposed at vertices of octagons.

The conductive wire 430 is connected to the power line 300. Specifically, as shown in Fig. 5a, a first end of the conductive wire 430 is insulated about the lower magnet 520-2 and a second end of the conductive wire 430 is connected to the power line 300. In addition, as shown in Fig. 5a, the conductive wire 430 passes about the second ends of the one or more metal pillars 540 in zigzag form. In one embodiment, as shown in Fig. 5b, the conductive wire 430 may be coiled around each of the one or more metal pillars 540 and passed about the second ends of the one or more metal pillars 540 in zigzag form.

The upper case 510-1 comprises the magnet groove 550-1 in which the upper magnet 520-1 is installed and the pillar groove 530-1 in which the first end of each of the one or more metal pillars 540 is inserted.

The lower case 510-2 comprises the magnet groove 550-2 in which the lower magnet 520-2 is installed and the pillar groove 530-2 in which the second end of each of the one or more metal pillars 540 is inserted.

In addition, the lower case 510-2 comprises a zigzag groove 560 in which the conductive wire 430 is inserted. As shown in Fig. 5a, the first end of the conductive wire 430 which is inserted in the zigzag groove 560 is insulated about the lower magnet 520-2, and the second end of the conductive wire 430 extends to be connected the power line 300.

The upper magnet 520-1 and the lower magnet 520-2 are inserted in the upper case 510-1 and the lower case 510-2, respectively, and the upper case 510-1 and the lower case 510-2 having the upper magnet 520-1 and the lower magnet 520-2 inserted therein are joined by the one or more metal pillars 540 to constitute the device 410. The conductive wire 430 may be installed on a surface of the lower case 510-2 or inserted in the zigzag groove of the lower case 510-2.

The second end of the conductive wire 430 is connected to the power line 300 to apply the torsional electromagnetic wave generated by the device 410.

Inventors of present invention have carried out various tests on performance of the device 410 in accordance with the present invention.

In a first comparison test, tests are carried out by applying a voltage of about 385V to a 10 kW load with and without the device 410.

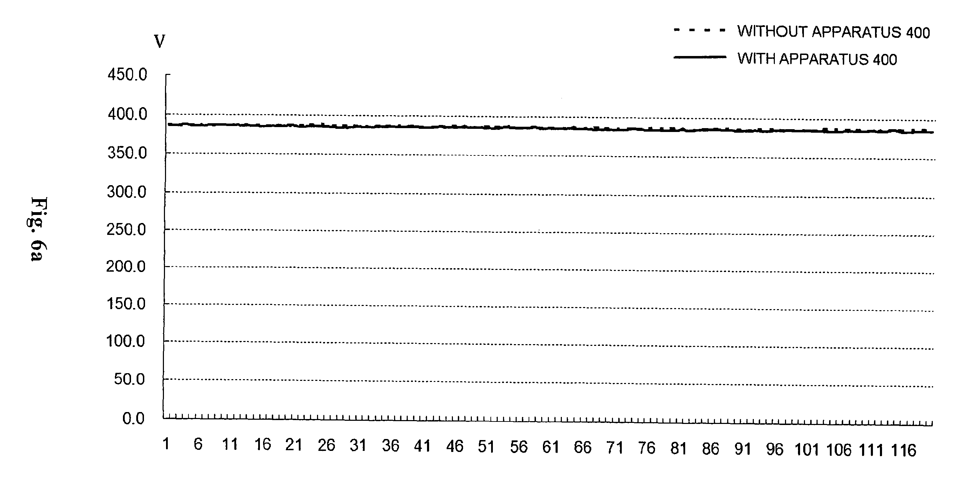

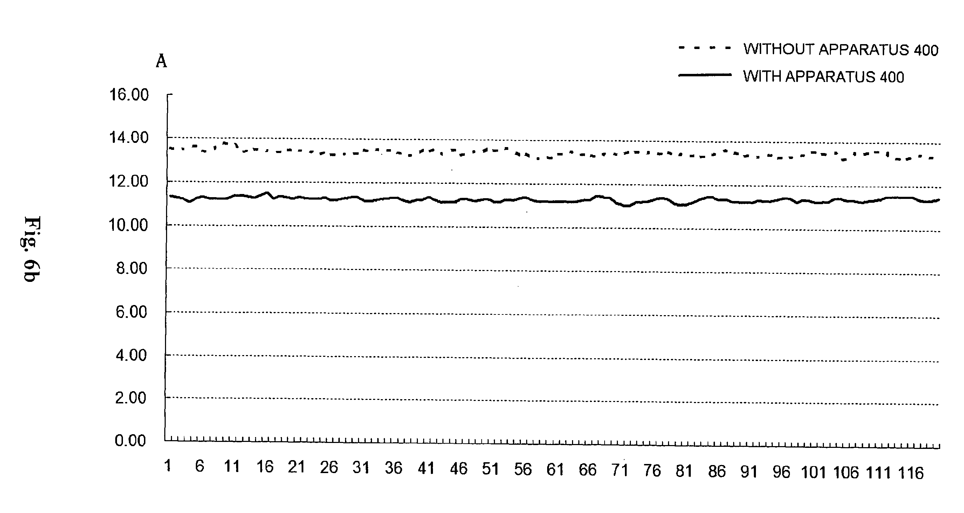

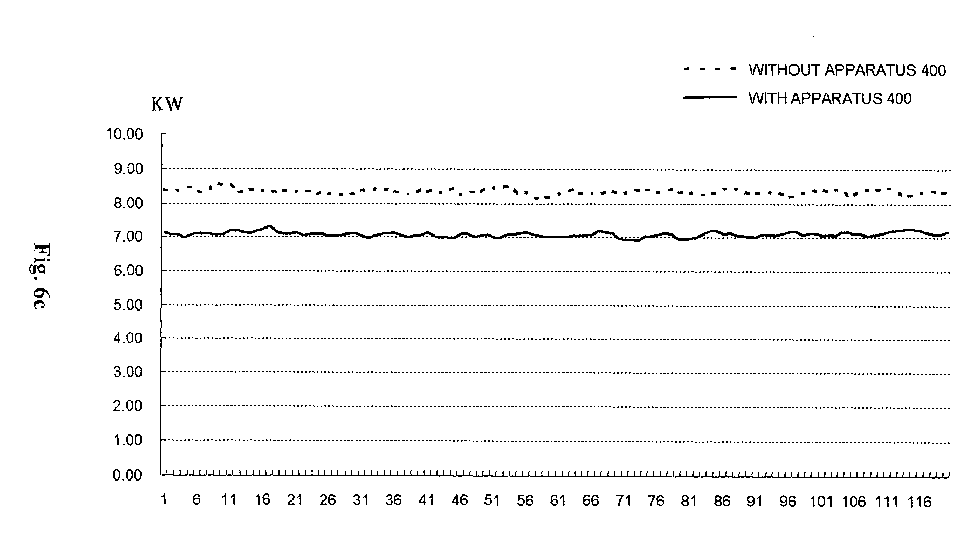

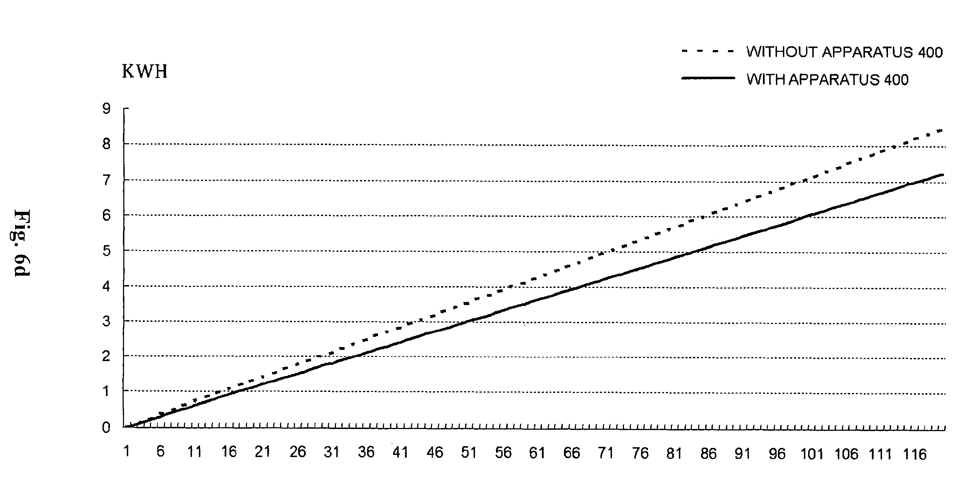

Figs. 6a through 6d are graphs exemplifying results of the fist comparison test on the 10 kW load with and without the device 410, where a voltage (V), a current (A), an effective electric power (kW) and an energy (kWh) are shown.

Referring to Figs. 6a through 6d, as the consumed current decreases when the device 410 is installed, the effective electric power and the energy are reduced compared to the case where the device 410 is not installed. The voltage, the current, the effective electric power and the energy shown in Fig. 6a through 6d are summarized in table 1.

Table 1

|  | voltage(V) | current(A) | effective electric power(kW) | energy(kWh) | reduction rate(%) |
|---|---|---|---|---|---|
| without apparatus 400 | 386.4 | 13.4 | 8.4 | 8.5 | - |
| with apparatus 400 | 385.4 | 11.3 | 7.1 | 7.2 | 14.84 |

Referring to table 1, the consumption of the electric power wherein the device 410 is installed is 14.84% less than that of the case where the device 410 is not installed.

In a second comparison test, tests are carried out by applying a voltage of about 380V to an air conditioner with and without the device 410.

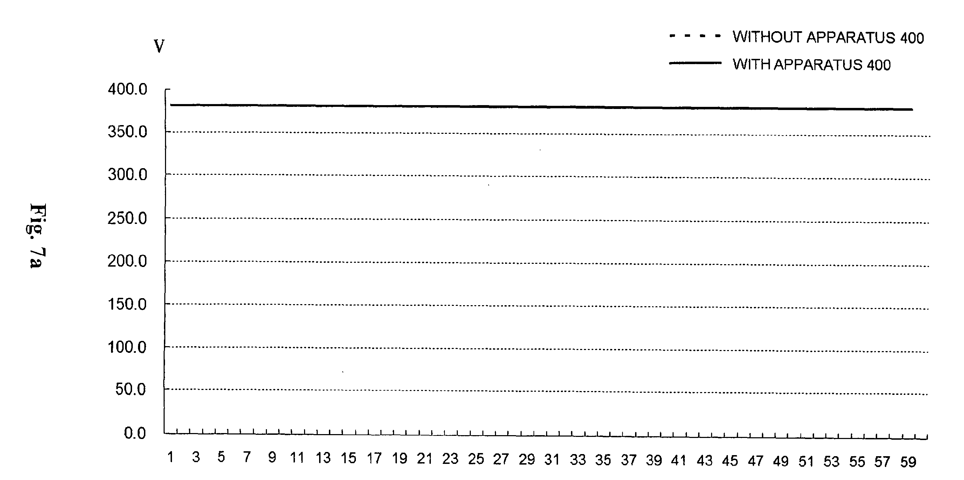

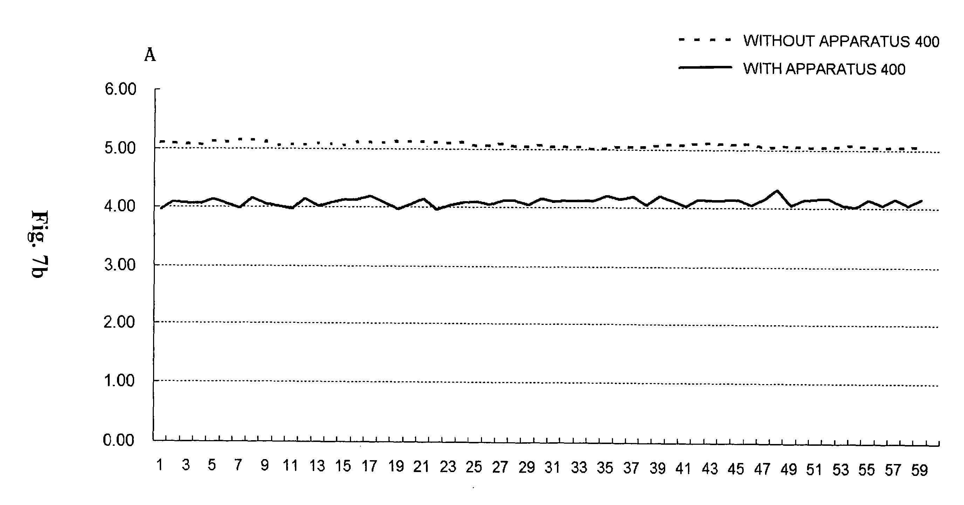

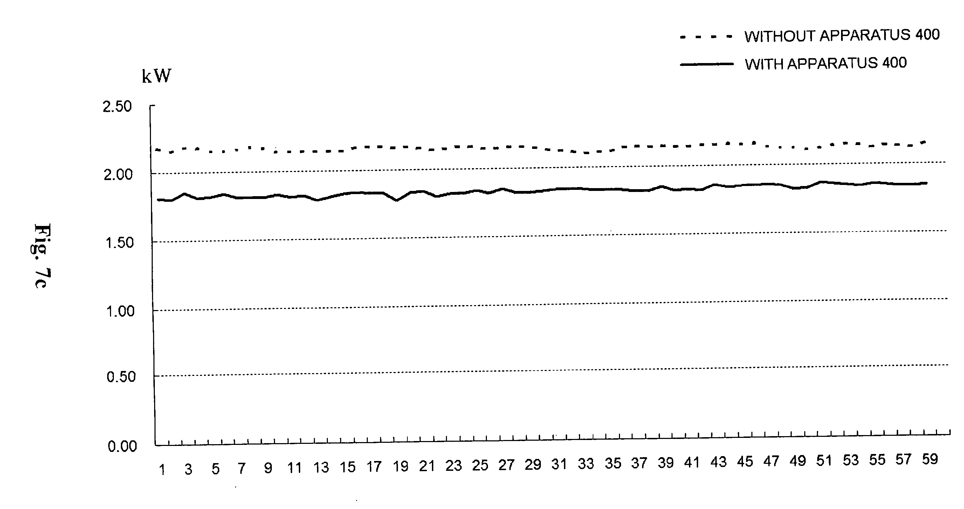

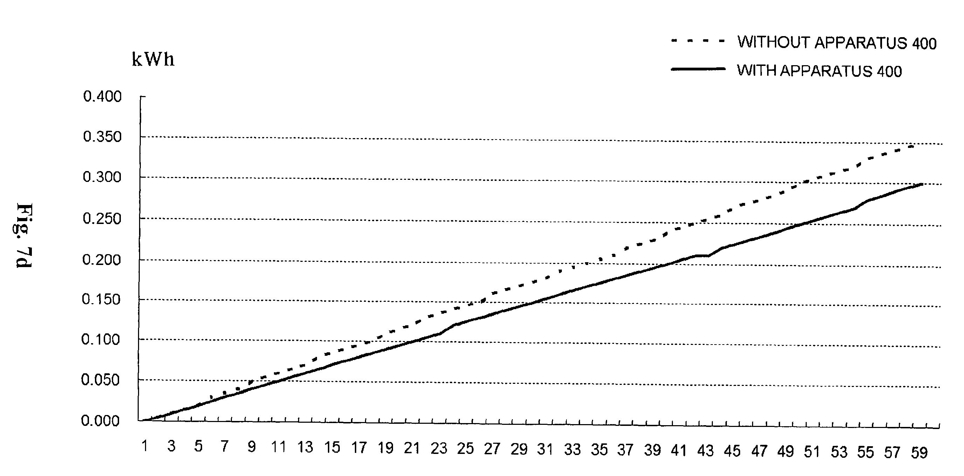

Figs. 7a through 7d are graphs exemplifying results of the second comparison test wherein the air conditioner is used as the load with and without the device 410, where the voltage (V), the current (A), the effective electric power (kW) and the energy (kWh) are shown.

Referring to Figs. 7a through 7d, as the consumed current decreases when the device 410 is installed, the effective electric power and the energy are reduced compared to the case where the device 410 is not installed. The voltage, the current, the effective electric power and the energy shown in Fig. 7a through 7d are summarized in table 2.

Table 2

|  | voltage(V) | current(A) | effective electric power(kW) | energy(kWh) | reduction rate(%) |
|---|---|---|---|---|---|
| without apparatus 400 | 380.6 | 5.08 | 2.15 | 0.35 | - |
| with apparatus 400 | 380.8 | 4.09 | 1.83 | 0.30 | 14.2 |

Referring to the table 2, the consumption of the electric power wherein the device 410 is installed is 14.2% less than that of the case where the apparatus 400 is not installed.

According to the various tests carried out by the inventors of the present invention, the amount of the electric power reduced by installing the apparatus 400 peaked when the load is an induction motor. Considering the fact that the induction motor is frequently used in a compressor of the air conditioner, the electric power consumed in devices such the air conditioner consuming a large amount of electric power can be drastically reduced.

A device for generating a torsional electromagnetic wave and an electric power system employing the same in accordance with the present invention have following advantages.

Since the device for generating the torsional electromagnetic wave and the electric power system employing the same in accordance with the present invention are electrically isolated from the power source unit providing the power source to the load, the apparatus and the method may be used regardless of the current and the voltage provided by the power source unit.

In addition, since the device for generating the torsional electromagnetic wave in accordance with the present invention may be built using only the magnet, the metal pillar and the conductive wire, the apparatus may be easily manufactured at a low cost.

Moreover, since the device for generating the torsional electromagnetic wave and the electric power system employing the same in accordance with the present can be used regardless of a power supply system such as a single-phase electric system and a tri-phase electric system, the apparatus and the method do not require re-designs according to the power supply system.

In addition, since the device for generating the torsional electromagnetic wave and the electric power system employing the same in accordance with the present invention exhibit high performance for the load such as the induction motor, power consumptions of devices such as an air conditioner and a refrigerator may be reduced.

While the present invention has been particularly shown and described with reference to the preferred embodiment thereof, it will be understood by those skilled in the art that various changes in form and details may be effected therein without departing from the spirit and scope of the invention as defined by the appended claims.

**Claims**

1. A device for generating a torsional electromagnetic wave, the device being connected to a power source unit and a load and applying the torsional electromagnetic wave to a power line electrically connecting the power source unit and the load, the device comprising:

    an upper magnet and a lower magnet for generating a magnetic field therebetween;
    one or more metal pillars installed between the upper magnet and the lower magnet; and
    a conductive wire connected to the power line,
    wherein a first end of the conductive wire is insulated about the lower magnet, a second end of the conductive wire is connected to the power line, and the conductive wire passes about second ends of one or more metal pillars in zigzag form.

2. The device in accordance with claim 1, wherein a north pole of the upper magnet faces a south pole of the lower magnet.

3. The device in accordance with claim 1, wherein a magnetic force of the lower magnet is stronger than that of the upper magnet.

4. The device in accordance with claim 1, wherein a first end of each of the one or more metal pillars is disposed about the upper magnet, and a second end of each of the one or more metal pillars disposed about the lower magnet.

5. The device in accordance with claim 4, wherein the device further comprises;

    an upper case comprising a first magnet groove wherein the upper magnet is installed and a first pillar groove wherein the first end of each of one or more metal pillars is inserted; and
    a lower case comprising a second magnet groove wherein the lower magnet is installed and a second pillar groove wherein the second end of each of one or more metal pillars is inserted.

6. The device in accordance with claim 5, wherein the lower case comprises a zigzag groove wherein the conductive wire is inserted.

7. The device in accordance with claim 1, wherein the load comprises an induction motor.

8. The device in accordance with claim 1, wherein each of one or more metal pillars comprises a copper rod.

9. The device in accordance with claim 1, wherein the one or more metal pillars comprise six copper rods parallel to each other, and first ends of the six copper rods are disposed at vertices of a first hexagon and second ends of the six copper rods are disposed at vertices of a second hexagon.

10. The device in accordance with claim 1, wherein the torsional electromagnetic wave applied to the power line has a wavelength corresponding to a frequency of an electron flowing through the power line.

**11.** The device in accordance with claim 1, wherein the conductive wire is coiled around each of the one or more metal pillars and passes between the second ends of the one or more metal pillars in zigzag form.

**12.** A power system, comprising:

a power source unit for providing a power to a load via a power line connecting the power source unit and the load; and
an device for generating a torsional electromagnetic wave for applying a torsional electromagnetic wave to the power line, wherein the device comprises:

an upper magnet and a lower magnet for generating a magnetic field therebetween;
one or more metal pillars installed between the upper magnet and the lower magnet; and
a conductive wire connected to the power line,
wherein a first end of the conductive wire is insulated about the lower magnet, a second end of the conductive wire is connected to the power line, and the conductive wire passes between second ends of one or more metal pillars in zigzag form.

**13.** The power system in accordance with claim 12, wherein a first end of each of the one or more metal pillars is disposed about the upper magnet, and a second end of each of the one or more metal pillars disposed about the lower magnet.

**14.** The power system in accordance with claim 13, wherein the device further comprises;

an upper case comprising a first magnet groove wherein the upper magnet is installed and a first pillar groove wherein the first end of each of one or more metal pillars is inserted; and
a lower case comprising a second magnet groove wherein the lower magnet is installed and a second pillar groove wherein the second end of each of one or more metal pillars is inserted.

**15.** The power system in accordance with claim 14, wherein the lower case comprises a zigzag groove wherein the conductive wire is inserted.

Fig. 1

**Fig. 2**

**Fig. 3a**

**Fig. 3b**

410

A                 A'

510-1

540                      540

510-2

520-2

**Fig. 4a**

540      520-1

510-1

540                     540

510-2

520-2

**Fig. 4b**

(ii)

530-1

550-1

530-1

(i)

A'

530-1

550-1

530-1

A

(iii)

530-1

550-1

530-1

**Fig. 4c**

**Fig. 4d**

530-2

430

INSULATED

530-2

550-2

TO POWER
LINE

430

**Fig. 5a**

530-2

430

INSULATED

530-2

550-2

TO POWER
LINE

430

**Fig. 5b**

Fig. 6a

Fig. 6b

Fig. 6c

KWH

- - - - WITHOUT APPARATUS 400
——— WITH APPARATUS 400

Fig. 6d

EP 2 482 414 A2

18

Fig. 7a

Fig. 7b

Fig. 7c

Fig. 7d

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110009853